# EUROPÄISCHE PATENTSCHRIFT

(11) **EP 1 691 142 B1**
(45) Veröffentlichungstag und Bekanntmachung des Hinweises auf die Patenterteilung: **30.07.2014**
(21) Anmeldenummer: 06000051.0
(22) Anmeldetag: 03.01.2006
(51) Int. Cl.: F24F 12/00, F28F 21/06, F28F 19/00

(54) **Luft-Luft-Wärmetauscher für Raumlüftungsanlagen**
Air-Air heat exchanger for room ventilation systems
Echangeur de chaleur air-air pour installations de ventilation de locaux

(30) Priorität: 12.01.2005 DE 102005001382
(43) Veröffentlichungstag der Anmeldung: 16.08.2006
(73) Patentinhaber: Schütz GmbH & Co. KGaA, 56242 Selters / Westerwald (DE)
(72) Erfinder: Schütz, Udo, 56242 Selters / Westerwald (DE)
(74) Vertreter: advotec.

(56) Entgegenhaltungen:
- EP-A- 1 249 669
- DE-A1- 2 652 528
- FR-A- 2 230 403
- FR-A- 2 251 793
- FR-A- 2 512 035

## Beschreibung

Die Erfindung betrifft Luft-Luft-Wärmetauscher für Raumlüftungsanlagen zum Erwärmen von aus dem Freien angesaugter kühler Außenluft, die als Zuluft in einen Gebäuderaum gefördert wird, durch die aus einem Gebäuderaum abgesaugte warme Abluft, die als Fortluft ins Freie gefördert wird (Prospekt air-con der Firma ac.m Multitec System GmbH).

Bei Luft-Luft-Wärmetauschern der gattungsgemäßen Art, die als Kreuzstrom-, Kreuzgegenstrom- und Gegenstrom-Plattenwärmetauscher ausgebildet sind und in ein Zentralluftgerät eingebaut werden, besteht die Gefahr, daß bei kühlen Außenlufttemperaturen die aus einem Gebäuderaum abgesaugte Abluft in dem Wärmetauscher durch die Außenluft auf Frosttemperatur abgekühlt wird und sich fortluftseitig in dem Wärmetauscher Eis bildet und der Wärmetauscher zufriert, so daß die Raumlüftung außer Betrieb gesetzt wird.

Um das Einfrieren des Wärmetauschers zu verhindern, werden Schutzsysteme unterschiedlicher Art eingesetzt, beispielsweise ein Vorheizregister zum Erwärmen der kalten Außenluft oder ein Bypass zum Vorbeileiten der kalten Außenluft am Wärmetauscher, wobei diese Schutzsysteme in bzw. an das Zentralluftgerät integriert werden.

Ein Luft-Luft-Wärmtauscher für Raumluftanlagen gemäß dem Oberbegriff des Anspruchs 1 ist aus der FR-A-2251793 bekannt. Ferner bestehen die Lamellen des Wärmetauschers aus dieser Schrift aus Kunststoff.

Die bekannten Schutzeinrichtungen haben die Nachteile zusätzlicher Herstellungskosten, eines erhöhten Raumbedarfs sowie eines erhöhten Energieeintrags.

Der Erfindung liegt die Aufgabe zugrunde, den gattungsgemäßen Luft-Luft-Wärmetauscher im Hinblick auf eine Verbesserung der Betriebssicherheit und Effizienz ohne eine größere Erhöhung der Herstellungskosten weiterzuentwickeln.

Diese Aufgabe ist erfindungsgemäß gelöst durch einen Luft-Luft-Wärmetauscher mit dem Merkmalen des Patentanspruchs 1.

Die Unteransprüche beinhalten vorteilhafte und zweckmäßige Weiterbildungen der Erfindung.

Die erfindungsgemäße Wärmetauscherkonstruktion, bei der elektrisch beheizbare, hohle Lamellen Verwendung finden, die aus einer elektrisch leitenden Heizfolie aus Kunststoff bestehen, ermöglicht bei tiefen Außenlufttemperaturen eine Erwärmung der einzelnen Lamellen derart, daß die aus einem Gebäuderaum abgesaugte, durch den Wärmetauscher geförderte Abluft nicht fortluftseitig durch Bildung von Kondensat einfriert. Das bei den bekannten mit einem Luft-Wärmetauscher ausgestatteten Zentralluftgeräten erforderliche Vor- oder Nachheizregister entfällt, so daß die Baugröße des Zentralluftgerätes verkleinert werden kann. Die Herstellung der Lamellen des Wärmetauschers aus einer elektrisch leitenden Heizfolie aus Kunststoff führt zu einer Vereinfachung der Fertigung und einer Verminderung der Herstellungskosten.

Die Erfindung ist nachfolgend anhand von Zeichnungsfiguren erläutert, die im einzelnen folgendes darstellen:
- Fig. 1: eine Seitenansicht eines mit einem Luft-Luft-Wärmetauscher ausgestatteten Zentralluftgerätes,
- Fig. 2: eine perspektivische Darstellung des Luft-Luft-Wärmetauschers des Zentralluftgerätes nach Fig. 1 in vergrößerter Darstellung,
- Fig. 3: eine Frontansicht des Wärmetauschers,
- Fig. 4: eine Draufsicht des Wärmetauschers und

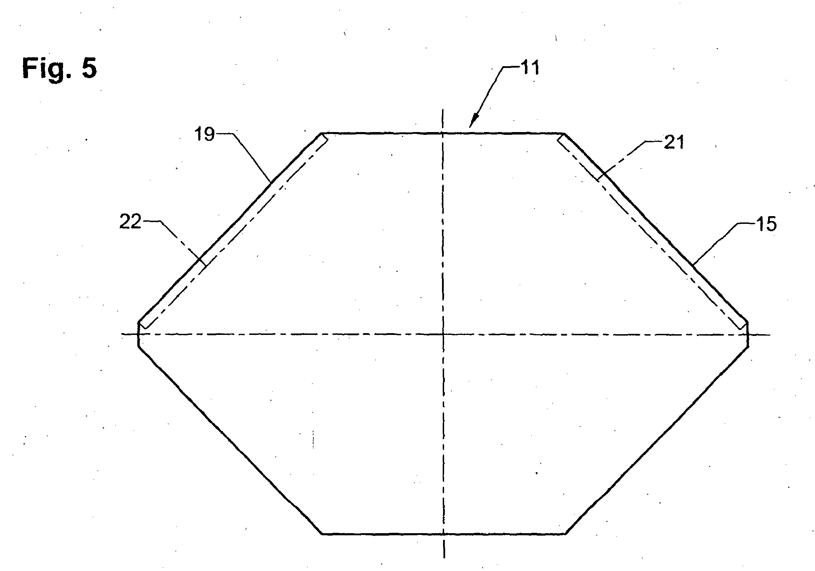

- Fig. 5: eine Seitenansicht einer Lamelle des Wärmetauschers.

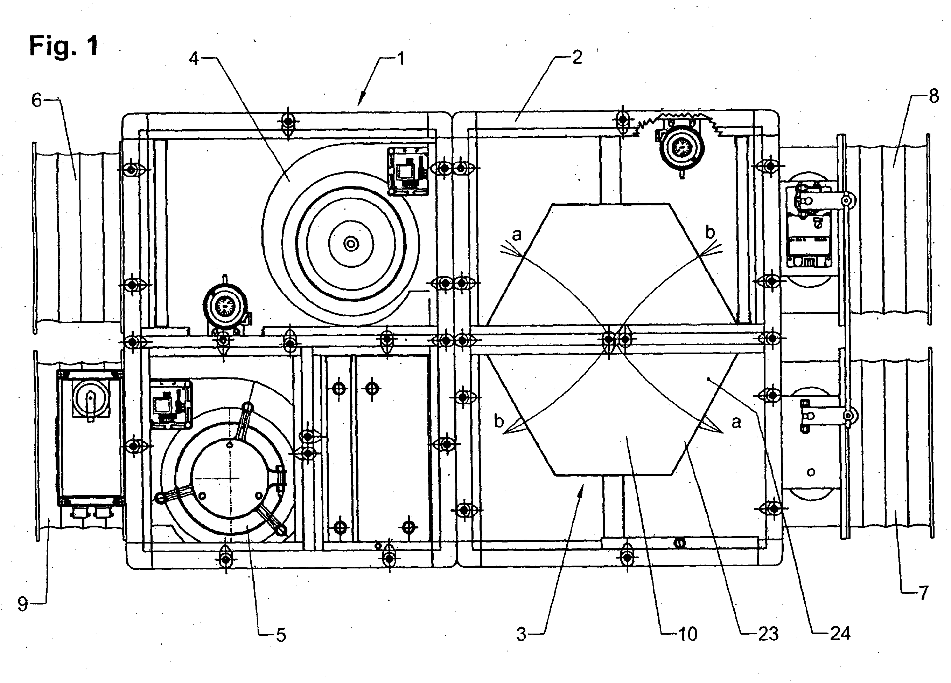

In dem Gehäuse 2 des Zentralluftgerätes 1 nach Fig. 1 für eine Raumlüftungsanlage sind ein Luft-Luft-Wärmetauscher 3 sowie zwei Ventilatoren 4, 5 untergebracht. Der erste Ventilator 4 saugt warme Abluft aus der Abluftleitung der Raumlüftungsanlage eines Gebäudes durch einen Lufteintrittsstutzen 6 des Gehäuses 2 an und fördert die Abluft in Pfeilrichtung a durch den als Kreuzgegenstromwärmetauscher betriebenen Wärmetauscher 3. Die Abluft strömt als Fortluft durch einen Luftaustrittsstutzen 7 des Gehäuses 2 des Zentralluftgerätes 1 ins Freie.

Der zweite Ventilator 5 des Zentralluftgerätes 1 saugt kühle Außenluft aus dem Freien durch einen weiteren Lufteintrittsstutzen 8 des Gehäuses 2 des Zentralluftgerätes 1 an und fördert die Außenluft im Kreuzgegenstrom zur warmen Abluft eines Gebäudes in Pfeilrichtung b durch den Wärmetauscher 3. Die Außenluft wird in dem Wärmetauscher 3 durch die Abluft vorgewärmt und strömt als Zuluft durch einen weiteren Luftaustrittsstutzen 9 des Gehäuses 2 des Zentralluftgerätes 1 in die Zuluftleitung der Raumlüftungsanlage eines Gebäudes.

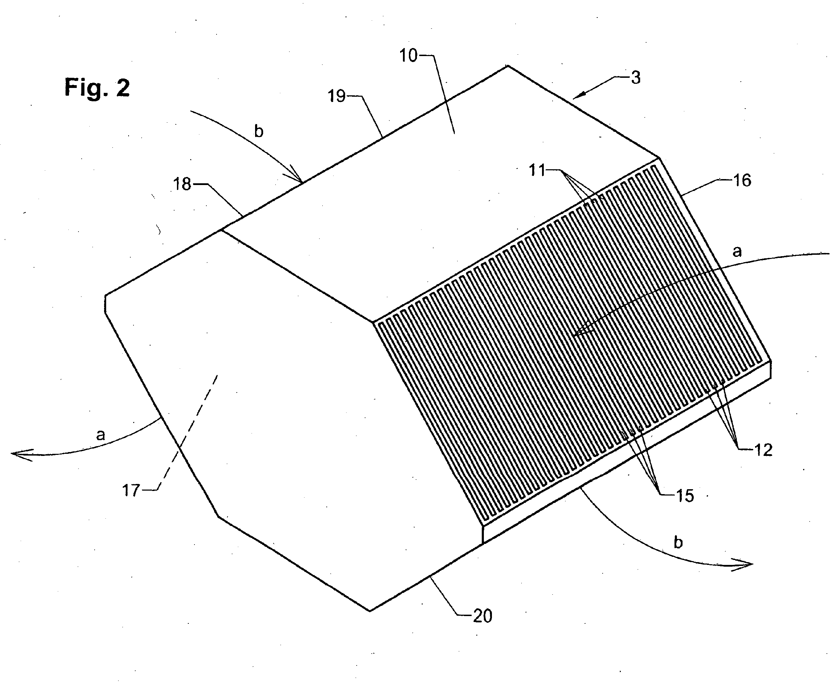

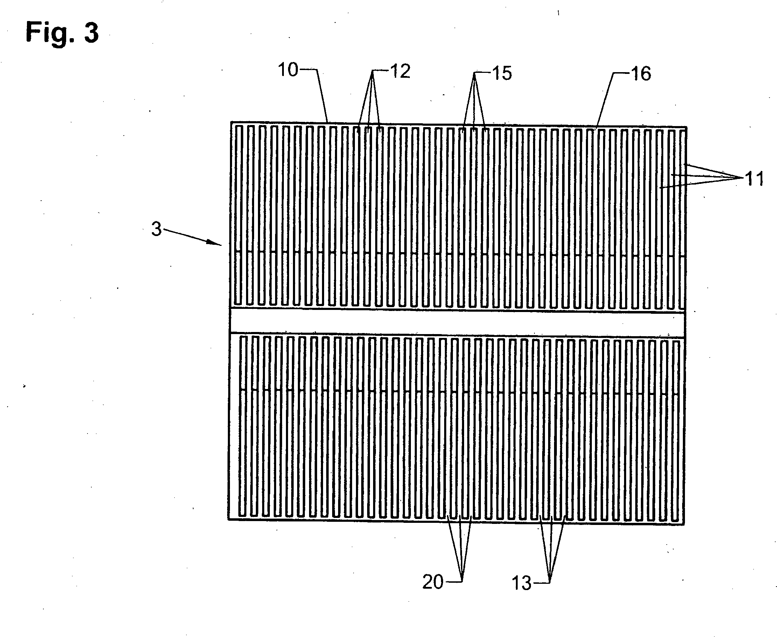

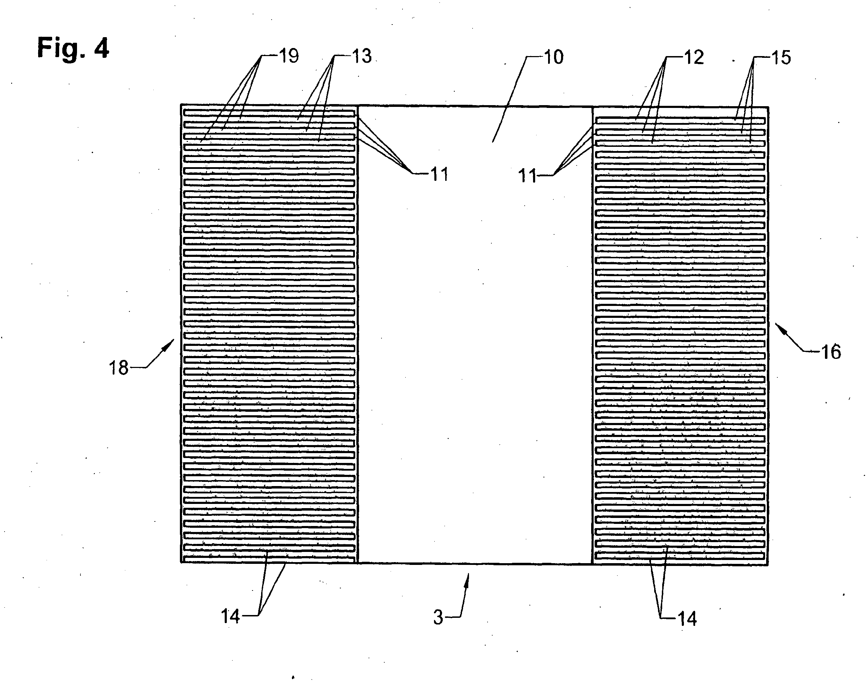

Das Gehäuse 10 des in den Fign. 2 bis 4 dargestellten Luft-Luft-Wärmetauschers 3, der als Kreuzgegenstromwärmetauscher betrieben wird, enthält eine Vielzahl von parallel angeordneten, elektrisch beheizbaren Lamellen 11 mit inneren Luftkanälen 12 für die Abluft und zwischen den beabstandeten Lamellen 11 gebildeten äußeren Luftkanälen 13 für die Außenluft, wobei die Lamellen 11 aus einer elektrisch leitenden Heizfolie 14 aus Kunststoff bestehen, die durch Kohlestoffasern in einer organischen oder anorganischen Matrix verstärkt ist.

Bei dem Wärmetauscher 3 gemäß den Fign. 2 bis 4 tritt die von dem Ventilator 4 geförderte Abluft über Lufteintrittsschlitze 15 der inneren Luftkanäle 12 der Lamellen 11 auf der Frontseite 16 des Gehäuses 10 des Wärmetauschers 3 in Pfeilrichtung a in diesen ein, durchströmt die inneren Luftkanäle 12 des Wärmetauschers und tritt durch Luftaustrittsschlitze 17 der inneren Luftkanäle 12 der Lamellen 11 auf der Rückseite 18 des Gehäuses 10 aus dem Wärmetauscher 3 aus.

Die im Gegenstrom zur Abluft in Pfeilrichtung b durch die äußeren Luftkanäle 13 zwischen den Lamellen 11 durch den Wärmetauscher 3 strömende Außenluft tritt durch Lufteintrittsschlitze 19 der äußeren Luftkanäle 13 auf der Rückseite 18 des Wärmetauschergehäuses 10 ein und verläßt den Wärmetauscher 3 durch Luftaustrittsschlitze 20 der äußeren Luftkanäle 13 auf der Frontseite 16 des Wärmetauschergehäuses 10.

Abweichend von der vorbeschriebenen Ausführungsform besteht die Möglichkeit, die Abluft auf der Rückseite 18 und die Außenluft auf der Frontseite 16 des Gehäuses 2 in den Wärmetauscher 3 einzuleiten.

Die Lamellen 11 sind an den Lufteintrittsschlitzen 15, 19 für die Abluft und die Außenluft auf der Frontseite 16 und der Rückseite 18 des Wärmetauschergehäuses 10 mit streifenförmigen Anschlußelektroden 21, 22 beispielsweise aus Kupfer oder einem elektrisch leitenden Kunststoff versehen, die mit der elektrisch leitenden Heizfolie aus Kunststoff mit eingelagerten Kohlestoffasern mittels eines elektrisch leitenden Klebers verklebt oder verschweißt sind.

Es besteht ferner die Möglichkeit, die Lamellen 11 an den Luftaustrittsschlitzen 17, 20 für die Abluft und die Außenluft auf der Rückseite 18 und der Frontseite 16 des Wärmetauschergehäuses 10 mit Anschlußelektroden 21, 22 zu versehen.

Die Lamellen 11 des Wärmetauschers 3 besitzen eine Vieleckform, vorzugsweise eine sechseckige Form, die durch zwei mit den Grundseiten aneinander grenzende Trapeze gebildet wird.

Im Betrieb des Zentralluftgerätes 1 wird die Temperatur bzw. der Druck der aus einem Gebäude abgesaugten Abluft auf der Fortluftseite 23 des Wärmetauschers 3 durch einen Temperatursensor bzw. Differenzdrucksensor 24 laufend gemessen. Sobald die Fortlufttemperatur auf einen Temperaturwert im Bereich des Eispunktes abfällt bzw. der Differenzdruck den eingestellten Wert überschreitet, wird durch Betätigen eines Relais durch ein von dem Temperatur- oder Differenzdrucksensor 24 übermitteltes Steuersignal eine elektrische Spannung an die Lamellen 11 angelegt, so daß sich deren Heizfolien 14 erwärmen und die durch den Wärmetauscher 3 strömende Abluft auf eine über der Eistemperatur liegende Temperatur nachgewärmt wird. Auf diese Weise wird eine Eisbildung im Wärmetauscher 3 durch die kondensierende Abluft wirkungsvoll vermieden. Sobald die Ablufttemperatur den eingestellten Sollwert über dem Frostpunkt erreicht, wird das Relais durch ein von dem Sensor 24 übermitteltes Steuersignal betätigt und die an den Lamellen 11 anliegende Betriebsspannung abgeschaltet.

## Patentansprüche

1. Luft-Luft-Wärmetauscher (3) für Raumlüftungsanlagen zum Erwärmen von aus dem Freien angesaugter kühler Außenluft, die als zuluft in einen Gebäuderaum gefördert wird, durch die aus einem Gebäuderaum abgesaugte warme Abluft, die als Fortluft ins Freie gefördert wird, **gekennzeichnet durch** parallel angeordnete, elektrische beheizbare Lamellen (11) mit inneren Luftkanälen (12) für die Abluft oder die Außenluft und zwischen den beabstandeten Lamellen (11) gebildete äußere Luftkanäle (13) für die Außenluft oder die Abluft, wobei die Lamellen (11) aus einer elektrisch leitenden Heizfolie (14) aus Kunststoff bestehen.

2. Luft-Luft-Wärmetauscher nach Anspruch 1, **gekennzeichnet durch** eine Ausbildung als Gegenstromwärmetauscher.

3. Luft-Luft-Wärmetauscher nach Anspruch 1, **dadurch gekennzeichnet, daß** dieser (3) als Kreuzstromwärmetauscher arbeitet.

4. Luft-Luft-Wärmetauscher nach Anspruch 1, **dadurch gekennzeichnet, daß** dieser (3) als Kreuzgegenstromwärmetauscher betrieben wird.

5. Luft-Luft-Wärmetauscher nach einem der Ansprüche 1 bis 4, **gekennzeichnet durch** Lamellen (11) aus einer Kunststoffolie (14), die **durch** Kohlestoffasern in einer organischen oder anorganischen Matrix verstärkt ist.

6. Luft-Luft-Wärmetauscher nach einem der Ansprüche 1 bis 5, **dadurch gekennzeichnet, daß** die einzelnen Lamellen (11) an den Lufteintrittsschlitzen (15, 19) oder den Luftaustrittsschlitzen (17, 20) mit elektrischen Anschlüssen versehen sind.

7. Luft-Luft-Wärmetauscher nach Anspruch 6, **gekennzeichnet durch** streifenförmige Anschlußelektroden (21, 22) aus Metall, insbesondere Kupfer oder einem elektrisch leitenden Kunststoffmaterial.

8. Luft-Luft-Wärmetauscher nach Anspruch 7, **gekennzeichnet durch** streifenförmige Anschlußelektroden (21, 22), die mit den Lamellen (11) mittels eines elektrisch leitenden Klebers verklebt sind.

9. Luft-Luft-Wärmetauscher nach Anspruch 6, **gekennzeichnet durch** streifenförmige Anschlußelektroden (21, 22), die mit den Lamellen (11) verschweißt sind.

10. Luft-Luft-Wärmetauscher nach einem der Ansprüche 1 bis 9, **dadurch gekennzeichnet, daß** die Lamellen (11) eine Vieleckform besitzen.

11. Luft-Luft-Wärmetauscher nach Anspruch 10, **gekennzeichnet durch** eine quadratische, rechteckige oder sechseckige Form der Lamellen (11).

12. Luft-Luft-Wärmetauscher nach einem der Ansprüche 1 bis 11, **dadurch gekennzeichnet, daß** dieser als Gas-Gas-Wärmetauscher betrieben wird.

## Claims

1. An air-to-air heat exchanger (3) for room ventilation systems for heating cool outside air suctioned from the outside, said cool air being transported as supply air into a building room, by means of the warm used air suctioned from a building room, said used air being transported as exhaust air to the outside,
**characterized by**
electrically heatable fins (11) which are arranged parallel and have internal air ducts (12) for the used air or the outside air and external air ducts (13) formed between the spaced fins (11) for the outside air or the used air, the fins (11) consisting of an electrically conductive heating foil (14) made of plastic.

2. The air-to-air heat exchanger according to claim 1,
**characterized by**
being formed as a counter-flow heat exchanger.

3. The air-to-air heat exchanger according to claim 1,
**characterized in that**
it (3) works as a cross-flow heat exchanger.

4. The air-to-air heat exchanger according to claim 1,
**characterized in that**
it (3) is operated as a cross-counter-flow heat exchanger.

5. The air-to-air heat exchanger according to any of the claims 1 to 4, **characterized by**
fins (11) made of a plastic film (14) which is reinforced by carbon fibers in an organic or inorganic matrix.

6. The air-to-air heat exchanger according to any of the claims 1 to 5, **characterized in that**
the individual fins (11) are provided with electrical connections at the air inlet slits (15, 19) or at the air outlet slits (17, 20).

7. The air-to-air heat exchanger according to claim 6,
**characterized by**
strip-shaped terminal electrodes (21, 22) made of metal, in particular copper or an electrically conductive plastic material.

8. The air-to-air heat exchanger according to claim 7,
**characterized by**
strip-shaped terminal electrodes (21, 22) which are glued to the fins (11) by means of an electrically conductive adhesive.

9. The air-to-air heat exchanger according to clam 6,
**characterized by**
strip-shaped terminal electrodes (21, 22) which are welded to the fins (11).

10. The air-to-air heat exchanger according to any of the claims 1 to 9,
**characterized in that**
the fins (11) have a polygonal shape.

11. The air-to-air heat exchanger according to claim 10,
**characterized by**
a quadratic, rectangular or hexagonal shape of the fins (11).

12. The air-to-air heat exchanger according to any of the claims 1 to 11,
**characterized in that**
it (3) is operated as a gas-to-gas heat exchanger.

## Revendications

1. Echangeur de chaleur air/air (3) pour des systèmes de ventilation des locaux pour chauffer de l'air frais extérieur aspiré du dehors, l'air extérieur étant transporté dans une pièce d'un bâtiment comme air amené, par l'air chaud sortant aspiré a partir de la pièce du bâtiment, l'air sortant étant transporter au dehors comme air d'échappement,
**caractérisé par**
des lamelles (11) disposées parallèlement et électriquement chauffables ayant des conduits d'air intérieurs (12) pour l'air sortant ou l'air extérieur et des conduits d'air extérieurs (13) formés entre les lamelles (11) espacées pour l'air extérieur ou l'air sortant, les lamelles (11) consistant en une feuille chauffante (14) électriquement conductrice en matière plastique.

2. Echangeur de chaleur air/air selon la revendication 1,
**caractérisé par**
être formé comme échangeur de chaleur à contre-courant.

3. Echangeur de chaleur air/air selon la revendication 1,
**caractérisé en ce qu'**
il (3) fonctionne comme échangeur de chaleur à courant croisé.

4. Echangeur de chaleur air/air selon la revendication 1,
**caractérisé en ce qu'**
il (3) est opéré comme échangeur de chaleur contre-courant croisé.

5. Echangeur de chaleur air/air selon l'une quelconque des revendications 1 à 4,
**caractérisé par**
des lamelles (11) en une feuille de plastique (14) qui est renforcée par des fibres de carbone dans une matrice organique ou inorganique.

6. Echangeur de chaleur air/air selon l'une quelconque des revendications 1 à 5,
**caractérisé en ce que**
les lamelles (11) individuelles sont fournie de connexions électriques aux fentes d'entrée d'air (15, 19) ou aux fentes de sortie d'air (17, 20).

7. Echangeur de chaleur air/air selon la revendication 6,
**caractérisé par**
des électrodes de connexion (21, 22) en forme de bandes en métal, en particulier en cuivre ou en matériau plastique électriquement conducteur.

8. Echangeur de chaleur air/air selon la revendication 7,
**caractérisé par**
des électrodes de connexion (21, 22) en forme de bandes qui sont collées aux lamelles (11) par un adhésif électriquement conducteur.

9. Echangeur de chaleur air/air selon la revendication 6,
**caractérisé par**
des électrodes de connexion (21, 22) en forme de bandes qui sont soudées aux lamelles (11).

10. Echangeur de chaleur air/air selon l'une quelconque des revendications 1 à 9,
**caractérisé en ce que**
les lamelles (11) ont une forme polygonale.

11. Echangeur de chaleur air/air selon la revendication 10,
**caractérisé par**
une forme quadratique, rectangulaire ou hexagonale des lamelles (11).

12. Echangeur de chaleur air/air selon l'une quelconque des revendications 1 à 11,
**caractérisé en ce qu'**
il (3) est opéré comme échangeur de chaleur gaz/gaz.
